## Europäisches Patentamt

## European Patent Office

## Office européen des brevets

(11) Veröffentlichungsnummer: **0 283 864**
B1

(12) **EUROPÄISCHE PATENTSCHRIFT**

(45) Veröffentlichungstag der Patentschrift:
**29.11.89**

(51) Int. Cl.⁴: **E03F 7/04,** F16K 15/03

(21) Anmeldenummer: **88103788.1**

(22) Anmeldetag: **10.03.88**

(54) **Fäkalienrückstauverschluss.**

(30) Priorität: **17.03.87 DE 3708551**
**20.11.87 DE 3739302**

(43) Veröffentlichungstag der Anmeldung:
**28.09.88 Patentblatt 88/39**

(45) Bekanntmachung des Hinweises auf die Patenterteilung:
**29.11.89 Patentblatt 89/48**

(84) Benannte Vertragsstaaten:
**AT BE CH DE FR LI NL**

(56) Entgegenhaltungen:
**DE-A- 3 509 779**
**US-A- 2 001 901**
**US-A- 2 603 451**
**US-A- 2 767 735**

(73) Patentinhaber: **Kessel, Bernhard, Bahnhofstrasse 31,**
**D-8071 Lenting(DE)**

(72) Erfinder: **Kessel, Bernhard, Bahnhofstrasse 31,**
**D-8071 Lenting(DE)**

(74) Vertreter: **Sasse, Volker, Dipl.-Ing., Parreutstrasse 27,**
**D-8070 Ingolstadt(DE)**

ACTORUM AG

**Beschreibung**

Die Erfindung betrifft einen Fäkalienrückstauverschluß der im Oberbegriff des Patentanspruchs 1 angegebenen Art.

Bei einem aus der DE-A 3 509 779 bekannten Fäkalienrückstauverschluß ist die Abschlußscheibe, die den zweiten Wulstbereich des reifenförmigen Dichtkörpers so festklemmt, daß im Inneren des Dichtkörpers zwischen der Abschlußscheibe und dem Klappenkörper ein Hohlraum mit einem Luftpolster entsteht, mit dem Klappenkörper nur über den Dichtkörper verbunden. Daraus resultiert der Nachteil, daß beim Einklemmen einer festen und bei Fäkalien häufig auftretenden Verunreinigung zwischen Dichtkörper und Sitz die Auflagefläche des Dichtkörpers nicht nur lokal eingedrückt wird, sondern der gesamte Dichtkörper zur gegenüberliegenden Seite nachgibt, weil eben die Abschlußscheibe nur schwimmend am Klappenkörper angebracht ist. Erfolgt dies beim Schließen, so erreicht die Rückstauklappe ihre Schließlage nicht mehr, wodurch einerseits in der Nachbarschaft der festen Verunreinigung keine einwandfreie Abdichtung erzielt wird und auch im übrigen Umfangsbereich des Dichtkörpers die Abdichtung nur unvollständig ist. Es können danach selbst bei geschlossenem Rückstauverschluß noch Fäkalienanteile durchlecken.

Der gleiche Nachteil tritt bei einem Abwaser-Rückstauverschluß gemäß der US-A 2 001 901 auf, bei der der Dichtkörper ein halbkugelförmiger hohler Ball ist, der am scheibenförmigen Klappenkörper festgelegt ist. Der Ball verlagert sich dann zur der eingeklemmten festen Verunreinigung gegenüberliegenden Seite, wodurch die Rückstauklappe keine eindeutige Schließlage mehr erreicht.

Der Erfindung liegt die Aufgabe zugrunde, einen Fäkalienrückstauverschluß der eingangs genannten Art dahingehend zu verbessern, daß er auch bei einer eingeklemmten festen Verunreinigung eine dichte Schließlage erreicht und sich später wieder leicht öffnen läßt.

Die gestellte Aufgabe wird erfindungsgemäß mit den im kennzeichnenden Teil des Patentanspruchs 1 angegebenen Merkmalen gelöst.

Bei dieser Ausbildung ist zwar die Auflagefläche des Dichtkörpers soweit elastisch, daß sie beim Einklemmen einer festen Verunreinigung auch in unmittelbarer Nachbarschaft zu dieser Verunreinigung abzudichten vermag. Jedoch verlagert sich der Dichtkörper nicht mehr zur der eingeklemmten Verunreinigung gegenüberliegenden Seite, sondern die Auflagefläche beult sich nur im lokalen Bereich der festen Verunreinigung ein. Der restliche Teil der Auflagefläche und damit die gesamte Rückstauklappe erreichen trotz der eingeklemmten festen Verunreinigung eine eindeutige Schließlage, in der der Rückstauverschluß zuverlässig abdichtet. Es wird sogar eine besonders gute Abdichtung im unmittelbaren Bereich der festen Verunreinigung erzielt, weil durch die feste Verbindung zwischen der Abschlußscheibe und dem Klappenkörper die gesamte Oberflächenspannung bzw. -elastizität in der Auflagefläche dort wirkt, wo die feste Verunreinigung eingeklemmt worden ist. Das spätere Öffnen des Rückstauverschlusses wird durch die spezielle Elastizität der Auflageflächen erleichtert.

Eine zweckmäßige Ausführungsform geht aus Anspruch 2 hervor. Dank der hohlen Ausbildung des Dichtkörpers bzw. aufgrund des unterhalb der Auflagefläche liegenden Hohlraumes wirkt die Oberflächenspannung in der Auflagefläche so, daß sich der Dichtkörper um die feste Verunreinigung herumlegt und in deren unmittelbarer Nachbarschaft einwandfrei abdichtet. Die Auflagefläche wird sehr weich, was auch bei größeren festen Verunreinigungen noch zu einer einwandfreien Abdichtung führt. Der restliche Bereich der Auflagefläche des Dichtkörpers dichtet hingegen genau so ab, als ob keine feste Verunreinigung eingeklemmt worden wäre. Alternativ könnte der Dichtkörper auch aus Moosgummi oder elastischem Kunststoffschaum mit einer dichten Außenhaut gebildet sein. Moosgummi oder ein weicher Kunststoffschaum mit geschlossener Außenhaut ist sehr punktelastisch, so daß aufgrund der starken Konvexität der Auflagefläche auch größere feste Verunreinigungen die Dichtfunktion nicht beeinträchtigen können, wenn sie zwischen Auflagefläche und Auflage eingeklemmt werden.

Eine weitere, besonders zweckmäßige Ausführungsform geht aus Anspruch 3 hervor. Aufgrund dieser Vorspannung kommt die Punktelastizität der Auflagefläche besonders gut zum Tragen, wenn eine feste Verunreinigung eingeklemmt wird, weil dann in deren unmitelbarer Nachbarschaft eine einwandfreie Ab dichtung erzielt wird.

Eine weitere, besonders vorteilhafte Ausführungsform geht aus Anspruch 4 hervor. Die Dichtlippe arbeitet beim Schließen der Rückstauklappe mit dem Dichtsitz zusammen und übernimmt einen Großteil der Dichtfunktion. Dabei läßt sie sich bei Anlage an der Auflage des Dichtsitzes relativ leicht umklappen. Dank ihrer leichten Verformbarkeit und Eindrückbarkeit umschließt sie eine feste und dort eingeklemmte Verunreinigung, legt sich sozusagen um die Verunreinigung herum und trägt zur guten Abdichtung in der Schließlage der Rückstauklappe bei. Es wird mit der Dichtlippe sozusagen ein in radialer Richtung der Rückstauklappe erweiterter Verformungsbereich geschaffen und zudem der Vorteil erreicht, daß die Rückstauklappe nach längerer Dauer der Schließlage wieder leicht geöffnet werden kann und nicht am Sitz festklebt. Die Wirkung wird mit der bevorzugten Ausbildung sogar noch verbessert, weil sich die nebeneinanderliegenden Dichtlippen in der Dichtwirkung ergänzen und eine eingeklemmte feste Verunreinigung satt umschließen. Auch bei mehreren Dichtlippen ist das leichte Öffnen der Rückstauklappe gewährleistet, weil die Dichtlippen nicht zum Anhaften auf der Auflage des Dichtsitzes neigen.

Die Dichtlippen lassen sich besonders leicht verformen, wenn die Merkmale von Anspruch 5 gegeben sind. Bei der Bewegung in die Schließlage schneiden die Dichtlippen in die Verunreinigung ein, falls diese nicht vollständig starr, sondern beispielsweise ein textiler Klumpen oder dgl. ist.

Zweckmäßig ist ferner die Ausführungsform gemäß Anspruch 6, weil bei dieser Ausbildung die Lippen als erstes mit der eingeklemmten Verunreinigung in Berührung kommen und bei der weiteren Bewegung der Rückstauklappe diese dicht einschließen. Der radial weiter innenliegende Teil der Auflagefläche kommt - wenn überhaupt - erst später mit der Verunreinigung und der Auflage auf dem Dichsitz in Berührung, um die endgültige Abdichtung herbeizuführen.

Zweckmäßig sind dabei ferner die Merkmale gemäß Anspruch 7, weil die Weichheit und hohe Elastiztät der Dichtlippen für das wünschenswerte abichtende Einschließen der Verunreinigung sorgen, weil sie leichter verformbar sind als der restliche Teil des Dichtkörpers.

Die Abdichtwirkung beim Einklemmen einer festen Verunreinigung kann weiterhin durch die in Anspruch 8 angegebene Maßnahme erhöht werden. Es wird nämlich auch in der Sitzfläche eine gute, lokale Nachgiebigkeit erreicht, so daß sich die feste Verunreinigung zum Teil in die Auflage und zum anderen Teil in die Auflagefläche des Dichtkörpers so eindrückt, daß in ihrer unmittelbaren Nachbarschaft eine gute Dichtwirkung eintritt.

Eine weitere, zweckmäßige Ausführungsform geht aus Anspruch 9 hervor. Das Verschrauben der Abschlußscheibe mit dem Klappenkörper ist einfach und bildet eine feste Verbindung zwischen diesen beiden Teilen.

Eine weitere, zweckmäßige Ausführungsform geht aus Anspruch 10 hervor. Mittels des Stützringes und der Abschlußscheibe wird der Dichtkörper wie ein Reifen auf der Felge festgelegt, wobei der Stützring auch für eine innere Abstützung der Wulstbereiche sorgt, während die Auflagefläche beweglich bleibt.

Zweckmäßig ist ferner die Ausführungsform von Anspruch 11, weil auf diese Weise der aus Moosgummi oder Kunststoffschaum bestehende Dichtkörper einfach auf den Klappenkörper so festgelegt wird, daß er auch unter höheren Belastungen seine Lage nicht zu verändern vermag.

Anhand der Zeichnung werden beispielhafte Ausführungsformen des Erfindungsgegenstandes erläutert.

Es zeigen

Fig 1 einen aus einem Sitz und einer Rückstauklappe bestehenden Fäkalien-Rückstauverschluß als Einsatzteil im Schnitt,

Fig. 2 einen Schnitt durch eine andere Ausführungsform einer Rückstauklappe und

Fig. 3 einen Schnitt durch einen abgewandelten Dichtkörper.

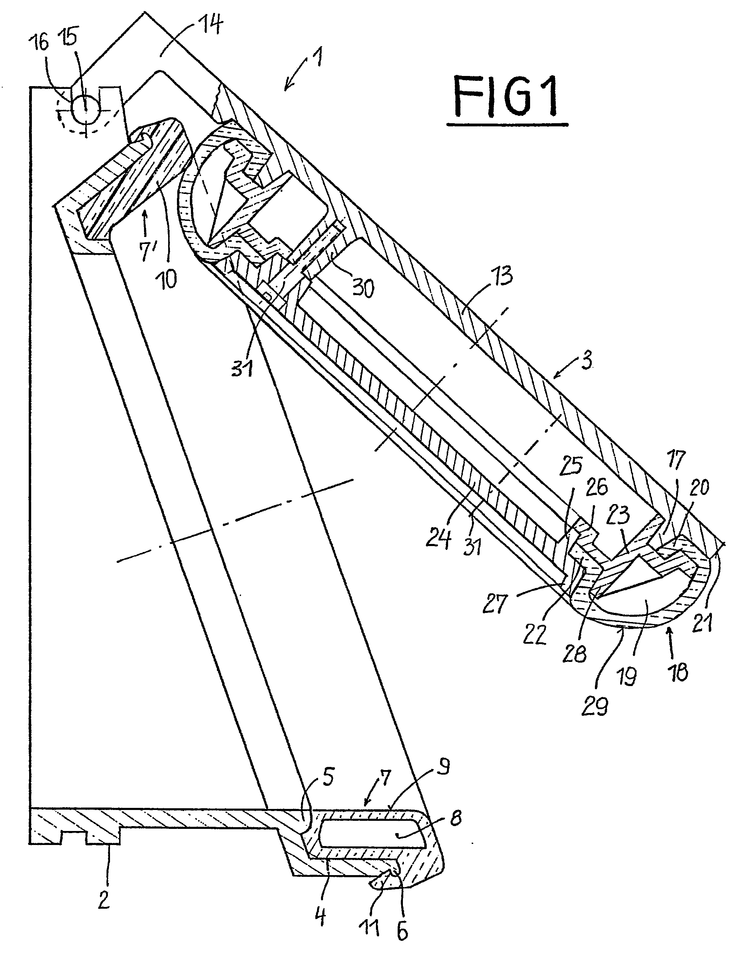

Ein Fäkalienrückstauverschluß 1 gemäß Fig. 1 ist ein Einsatzteil für beispielsweise ein Fäkalien-Reinigungsrohr. Er besteht aus einem in das Reinigungsrohr einschiebbaren und darin lagesicherbaren Sitz 2 und einer am Sitz 2 schwenkbar angelenkten Rückstauklappe 3. Der Sitz 2 besitzt eine umlaufende, kegelförmige Sitzfläche 4, die von einem Kragen 5 einerseits und einem Haltewulst 6 andererseits begrenzt wird. Auf die Sitzfläche 4 ist eine elastische Auflage 7 bzw. 7' aufgeknüpft, die die Form eines kegeligen Ringes hat.

Im unteren Teil von fig. 1 besitzt die Auflage einen Hohlraum 8 unterhalb einer Dichtfläche 9, so daß die Dichtfläche 9 punktelastisch wird. Die Auflage 7 stützt sich einerseits am Kragen 5 ab und ist mit einer Lippe 11 hinter den Haltewulst 6 geknüpft. Die Auflage 7 ist zweckmäßigerweise ein aus Gummi oder Kunststoff geformter Ring, der z.B. aus einem Endlosprofil durch stumpfes Aneinandervulkanisieren gebildet ist.

Im oberen Teil von Fig. 1 ist erkennbar, daß die Auflage 7' im Querschnitt auch voll ausgebildet sein kann, und zwar aus einem Moosgummi oder einem weichen Kunststoffschaum mit geschlossener Oberfläche. Die Auflage 7' ist wie die Auflage 7 auf die Sitzfläche 4 aufgeknüpft.

Die Rückstauklappe 3 besitzt einen scheibenförmigen Klappenkörper 13, der mit einem L-förmigen Hebel 14 und einer Achse 15 in ein Schwenklager 16 des Sitzes 2 so eingehängt ist, daß er um die Achse 15 schwenkt und beim Durchströmen des Sitzes 2 in Fig. 1 von links nach rechts selbsttätig öffnet, während er bei einem Rückstau in Fig. 1 von rechts nach links selbsttätig in eine Schließlage geht.

Auf der dem Sitz 2 zugewandten Vorderseite des Klappenkörpers 13 ist ein umlaufender Ringflansch 17 angeformt. Auf dem Klapenkörper 13 ist ein Dichtkörper 18 in Reifenform festgelegt, der einen umlaufenden Hohlraum 19 begrenzt. Ein Wulstbereich 20 des Dichtkörpers 18 ist zwischen dem Ringflansch 17, der Vorderseite des Klappenkörpers 13 und einer Seite eines Stützringes 23 abdichtend eingeklemmt. Der andere Wulstbereich 22 des Dichtkörpers 18 ist zwischen der anderen Seite des Stützringes 23 und einer Abschlußscheibe 24 abdichtend eingeklemmt. Dazu ist an der dem Klappenkörper 13 zugewandten Seite der Abschlußscheibe 24 ein umlaufender Ringlansch 25 vorgesehen, der in einen Gegenflansch 26 des Stützringes 23 eingreift. Ferner drückt ein äußerer Randflansch 27 der Abschlußscheibe 24 den Wulstbereich 22 gegen einen Halteflansch 28 des Stützringes 23. Der Dichtkörper 18 wird auf diese Weise so gehalten, daß seine Oberfläche eine Auflagefläche 29 mit starker Konvexität bildet, wobei - in einer Draufsicht auf die Rückstauklappe 3 - der Umriß der Auflagefläche 29 über den Rand 21 des Klapenkörpers 13 übersteht. Die Auflagefläche 29 ist zweckmäßigerweise einem Kreisbogen entsprechend gekrümmt, dessen Mittelpunkt in etwa in der Mitte des Halteflansches 28 des Stützringes 23 liegt.

Am Klappenkörper 13 sind in Umfangsrichtung verteilt mehrere Sockel 30 angeformt, in die Schrauben 31 eingeschraubt sind, die sich wiederum in der Abschlußscheibe 24 abstützen und diese gegen die Sockel 30 fest anpressen. Auf diese Weise ist eine feste Verbindung zwischen der Abschlußscheibe 24 und dem Klappenkörper 13 geschaffen, obwohl die Auflagefläche 29 des Dichtkörpers 18 punktelastisch bleibt und sich unter lokaler Verkleinerung des Querschnitts des Hohlraums 19 verformen kann.

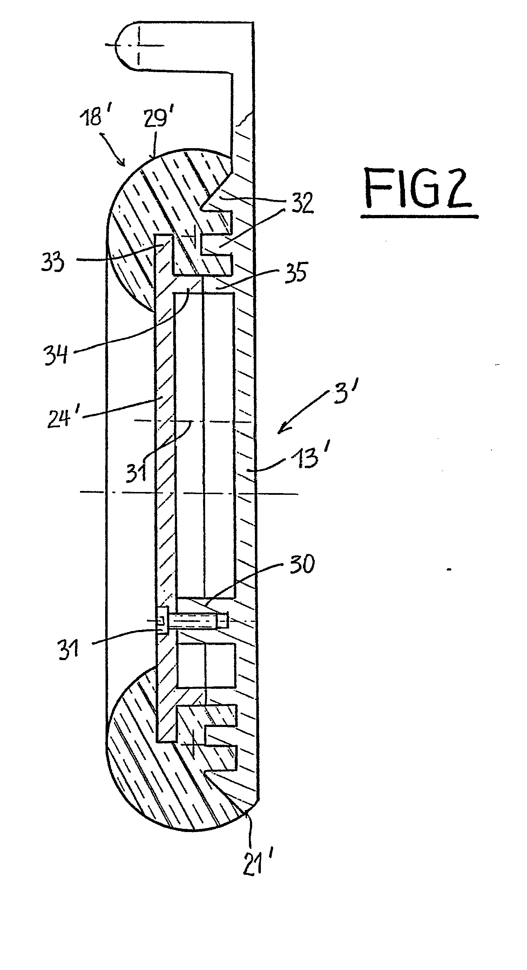

Bei der Ausführungsform von Fig. 2 ist der Dichtkörper 18 aus einem Moosgummi oder einem weichen Kunststoffschaum mit dichter Oberfläche gebildet. Der Querschnitt des Dichtkörpers 18' ist Teil eines Kreises, so daß - in einer Draufsicht auf die Rückstauklappe 3' - die Auflagefläche 29' über den Rand 21' des Klappenkörpers 13' übersteht. Der Klappenkörper 13' ist mit der Abschlußscheibe 24', die hier als Kreisringscheibe ausgebildet ist, durch Schrauben 31 in den Sockeln 30 verbunden.

Auf der der Abschlußscheibe 24 zugewandten Seite des Klappenkörpers 13 sind zwei konzentrische Ringflansche 32 angeformt, die formschlüssig in den Dichtkörper 18' eingreifen. Der äußere Ringflansch ist im Querschnitt dreieckig, so daß bis zur Auflagefläche 29' des Dichtkörpers 18' möglichst viel Fleisch verbleibt. Auf einem inneren Ringflansch 35 des Klappenkörpers 13' stützt sich ein Gegenflansch 34 der Abschlußscheibe 24' ab. Die Abschlußscheibe 24' besitzt einen geraden Randflansch 33, der um 90° zu den Ringflanschen 32 versetzt formschlüssig in Dichtkörper 18' eingreift, so daß dieser unverlierbar zwischen der Abshlußscheibe 24' und dem Klappenkörper 13' gehalten ist. Die Montage ist einfach. Zunächst wird der Dichtkörper 18' auf die Abschlußscheibe 24' aufgeknüpft. Danach wird diese mit aufgeknüpftem Dichtkörper 18', gegen den Klappenkörper 13' geschraubt, bis die Ringflansche 32 formschlüssig in den Dichtkörper 18', eingreifen. Die Festlegung des Dichtkörpers 18' erfolgt in großem Abstand von der Auflagefläche 29', so daß die Punktelastizität der Auflagefläche 29' sehr groß ist und auch größere feste Verunreinigungen sich in die Auflagefläche 29' so eindrücken können, daß um die feste Verunreinigung eine gute Abdichtung erzielt wird und die Rückstauklappe 3' ihre Schließlage zuverlässig erreicht.

Bei beiden Ausführungsformen ist es vorteilhaft, daß die Auflagefläche 29, 29' über nahezu ihre gesamte, im Querschnitt gesehene Erstreckung sehr nachgiebig ist, wodurch feste Verunreinigungen eingeschlossen werden können.

Bei der Ausführungsform von Fig. 1 können im Stützring 23 radiale Durchlässe vorgesehen sein, damit der Hohlraum 19 des Dichtkörpers 18 mit dem zwischen dem Klappenkörper 13 und der Abschlußscheibe 24 vorhandenen Hohlraum in Verbindung steht, damit ein großes nutzbares Luftpolster für die gewünschte Nachgiebigkeit bzw. Punktelastizität der Auflagefläche 29 entsteht.

Der in Fig. 3 im Schnitt gezeigte Dichtkörper 18" ist ein Moosgummi- oder Schaumstoff-Vollquerschnitt-Formteil, der mit wenigstens einer rückseitigen Umfangsnut 41 auf dem strichliert angedeuteten Klappenkörper 13" so befestigt wird, wie dies anhand der Fig. 1 und 2 erläutert wurde. In eine im Innendurchmesser des Dichtkörpers 18" eingeformte Umfangsnut 42, die unter einem Winkel α schräggestellt ist, wird die Abschlußplatte eingelegt, die dann gegen den Klappenkörper 13" gespannt wird und den Dichtkörper 18 festlegt. Die an sich kreisbogenförmig gerundete Auflagefläche 29" des Dichtkörpers 18" ist mit drei umlaufenden Dichtlippen 36, 37, 38 ausgestattet, die in etwa radial von der Auflagefläche 29" abstehen und im Querschnitt jeweils dreieckig sind. Die Dichtlippen 36, 37, 38 schließen aneinander unmittelbar an. Es ist jedoch auch möglich, zwischen ihnen Zwischenabstände vorzusehen. An die vorderste Dichtlippe 36 schließt sich ein gerundeter Vorderteil der Auflagefläche 29" an, der bis zur Nut 42 verläuft. Die vorderste Dichtlippe 36 steht – in einer Seitenansicht – über die Kontur des Vorderteils 40 über. Die hinterste Dichtlippe steht außen über den Rand 21" des Klappenkörpers 13" über. Die Dichtlippen 36, 37, 38 können weicher oder elastischer ausgebildet sein als der restliche Teil des Dichtkörpers 18".

Beim Bewegen des mit dem Dichtkörper 18" versehen Klapenkörpers 13" in die Schließlage kommen zunächst die Kämme der Dichtlippen 36, 37, 38 nacheinander zur Anlage an der Auflage 7 bzw. 7' des Dichtsitzes 4. Etwaige eingeklemmte feste Verunreinigungen werden allseits dicht umschlossen, wobei sich die Dichtlippen 36, 37, 38 nacheinander verformen. Bis die Schließlage erreicht ist, werden alle Dichtlippen 36, 37, 38 mehr oder weniger entgegen der Schließrichtung umgelegt und sorgen so für eine einwandfreie Abdichtung des Rückstaus. Da die Dichtlippen 36, 37, 38 keine zusammenhängende Dichtfläche, sondern eine aus Einzelflächen zusammengesetzte Dichtfläche definieren, haftet der Dichtkörper 18" nicht nennenswert an der Dichtfläche 9 an, selbst wenn die Schließlage über längere Zeit beibehalten wird. Aus diesem Grund läßt sich die Rückstauklappe wieder leicht in die Öffnungsstellung bringen.

Die Dichtlippen 36, 37, 38 könnten noch schlanker und länger ausgebildet sein. Ferner ist es denkbar, nur zwei oder mehr als drei Dichtlippen vorzusehen.

**Patentansprüche**

1. Fäkalienrückstauverschluß, insbesondere als Einsatzteil, mit einem Sitz und mit einer relativ zum Sitz (2) schwenkbaren Rückstauklappe (3), mit einem elastischen Dichtkörper (18, 18') an der Rückstauklappe, der eine konvex gekrümmte, verformbare Auflagefläche (29, 29', 29") besitzt, die bei geschlossenem Rückstauverschluß an einer Auflage (7) des Sitzes (2) anliegt, wobei der elastische Dichtkörper (18, 18') reifenförmig ausgebildet und mit seinen Reifenwulstbereichen (20, 22) wie in einer Felge am Rand eines scheibenförmigen Klappenkörpers (13, 13') einerseits und an einer Abschlußscheibe (24, 24') andererseits festgelegt ist, dadurch gekennzeichnet, daß die Abschlußscheibe (24, 24') am Klappenkörper (13, 13') fest abgestützt ist, und daß die Auflagefläche (29, 29' 29") des Dichtkörpers (18, 18' 18") derart konvex gekrümmt ist, daß sie – in einer Draufsicht auf den Klappenkörper (13, 13', 13") – zumindest zum Teil über den Rand (21, 21', 21") des Klappenkörpers (13, 13', 13") übersteht.

2. Fäkalienrückstauverschluß nach Anspruch 1, dadurch gekennzeichnet, daß der Dichtkörper (18) ein hohler Gummi- oder Kunststoff-Formkörper ist oder am Klappenkörper (13) einen Hohlraum (19) begrenzt.

3. Fäkalienrückstauverschluß nach den Ansprüchen 1 und 2, dadurch gekennzeichnet, daß der Dichtkörper (18) mittels der Abschlußscheibe (24) in Richtung zum Klappenkörper (13) unter einer die Auflagefläche (29) konvex ausbeulenden Vorspannung gehalten ist.

4. Fäkalienrückstauverschluß nach einem der Ansprüche 1 bis 3, dadurch gekennzeichnet, daß der vollquerschnittige Moosgummi- oder Kunststoffschaum-Dichtkörper (18") auf der Auflagefläche (29") mit wenigstens einer vorzugsweise drei umlaufenden Dichtlippen (36, 37, 38) ausgestattet ist, die in etwa senkrecht von der Auflagefläche (29") abstehen.

5. Fäkalienrückstauverschluß nach Anspruchen 4, dadurch gekennzeichnet, daß der Quershnitt jeder Dichtlippe (36, 37, 38) dreieckig ist, wobei die Spitze des Dreiecks von der Auflagefläche (29") weggerichtet ist.

6. Fäkalienrückstauverschluß nach Anspruch 4 oder 5, dadurch gekennzeichnet, daß - in einer Draufsicht - eine (38) der Dichtlippen (36, 37, 38) den Rand (21") des Klappenkörpers (13") überragt und daß - in einer Seitenansicht - zumindest die vorderste Dichtlippe (36) vor einem bogenförmigen Vorderteil (40) der Auflagefläche (29") liegt.

7. Fäkalienrückstauvershluß nach einem der Ansprüche 4 bis 6, dadurch gekennzeichnet, daß die Dichtlippen (36, 37, 38) mit größerer Elastizität und Weichheit ausgebildet sind als der restliche Teil des Dichtkörpers (18").

8. Fäkalienrückstauverschluß nach wenigstens eine der Ansprüche 1 bis 7, dadurch gekennzeichnet, daß zumindest der mit dem über den Rand (21, 21') des Klappenkörpers (13, 13') überstehende Teil der Auflagefläche (21', 29, 29', 29") des Dichtkörpers (13", 18, 18', 18") beim Schließen des Rückstauverschlusses (1) zusammentreffende Teil der Auflage (7) auf der Sitzfläche (4) hohl (Hohlraum 8) ausgebildet ist.

9. Fäkalienrückstauverschluß nach wenigstens einem der Ansprüche 1 bis 8, dadurch gekennzeichnet, daß die Abschlußscheibe (24, 24') mit dem Klappenkörper (13, 13') verschraubt ist.

10. Fäkalienrückstauverschluß nach wenigstens einem der Ansprüche 1 bis 9, dadurch gekennzeichnet, daß zwischen die Abschlußscheibe (24) und den Klappenkörper (13) ein Stützring (23) eingesetzt ist, an dessen einer Seite mit der Abschlußscheibe (24) der eine Wulstbereich (20) des Dichtkörpers (18) und an dessen anderer Seite mit dem Klappenkörper (13) der andere Wulstbereich (22), vorzugsweise jeweils abdichtend, festgeklemmt ist.

11. Fäkalienrückstauverschluß nach wenigstens einem der Ansprüche 1 bis 10, dadurch gekennzeichnet, daß auf der Stirnseite des Klappenkörpers (13') wenigstens ein konzentrisch umlaufender Steg (32) oder Vorsprung vorgesehen ist, die in den Dichtkörper (18', 18") formschlüssig eingreifen, und daß die Abschlußscheibe (24'), ggfs. mit kreisringförmiger Form, wenigstens einen um 90° gegenüber den Stegen (32) und Vorsprüngen versetzten Flansch (40) besitzt, der ebenfalls in den Dichtkörper (18, 18") formschlüssig eingreift.

## Revendications

1. Clapet antirefoulement d'égout, en particulier sous forme d'insert, comportant un siège et un clapet antirefoulement (3) susceptible de basculer par rapport au siège (4), comprenant un corps d'étanchéité élastique (18) sur le clapet antirefoulement, qui possède une surface d'appui incurvée convexe, déformable (29, 29, 29"), qui lorsque le clapet antirefoulement est fermé repose sur un appui (7) du siège (4), le corps élastique d'étanchéité (18) étant d'une structure de pneumatique est fixée d'une part par ses zones de talons de pneus (20, 12) comme dans une jante sur le bord d'un corps (13, 13') de clapet en forme de disque et d'autre part sur un disque de fermeture, caractérisé en ce que le disque de fermeture (24, 24') s'appuie de façon fixe sur le corps de clapet (13, 13'), et en ce que la surface d'appui (29, 29', 29") du corps étanche (18, 18', l8") est incurvé de façon convexe de telle sorte que — en vue de dessus du corps de clapet (13, 13', 13") — elle soit en saillie au moins au-dessus d'une partie du bord (21, 21', 21") du corps de clapet (13, 13', 13").

2. Clapet antirefoulement d'égout selon la revendication 1, caractérisé en ce que le corps d'étanchéité (18) est un corps de forme en caoutchouc ou en matière plastique, ou qu'il limite un volume creux (l9) sur le corps de clapet (13).

3. Clapet antirefoulement d'égout selon les revendications 1 et 2, caractérisé en ce que le corps étanche (18) est maintenu au milieu du disque de fermeture (24) en direction du corps de clapet (13) sous une contrainte qui déforme de façon convexe vers l'extérieur la surface d'appui (29).

4. Clapet antirefoulement d'égout selon l'une des revendications 1 à 3, caractérisé en ce que le corps d'étanchéité (18) en mousse de caoutchouc ou en matière plastique expansée de section pleine (18') comporte sur la surface d'appui (29') au moins une et de préférence trois lèvres d'étanchéité périphériques (36, 37, 38) qui s'écartent à peu près verticalement de la surface d'appui (29").

5. Clapet antirefoulement d'égout selon la revendication 4, caractérisé en ce que 18 section de chaque lèvre d'étanchéité (36, 37, 38) est triangulaire, la pointe du triangle tournent le dos à la surface d'appui (29").

6. Clapet antirefoulement d'égout selon la revendication 4 ou 5, caractérisé en ce que — en vue de dessus — l'une (38) des lèvres d'étanchéité (36, 37, 38) fait saillie au dessus du bord (21") du corps de clapet (13") et que — en vue de côté — au moins la lèvre d'étanchéité avant (36) repose devant une partie avancée cintrée (40) de la surface d'appui (29").

7. Clapet antirefoulement d'égout selon l'une des revendications 4 à 6, caractérisé en ce que les lèvres d'étanchéité (36, 37, 38) sont d'une souplesse et d'une élasticité plus importantes que le reste du corps d'étanchéité (18").

8. Clapet antirefoulement d'égout selon l'une au moins des revendications 1 à 7, caractérisé en ce qu'au moins la partie de l'appui (7) sur la surface de siège (4) qui, lors de la fermeture du clapet de refoulement (1), rencontre la partie de la surface d'appui (21", 29, 29', 29") du corps d'étanchéité (13", 18, 18', 18") en saillie au-dessus du bord (21, 21') du corps de clapet (13, 13') est de structure creuse (espace creux 8).

9. Clapet antirefoulement d'égout selon l'une au moins des revendications 1 à 8, caractérisé en ce que le disque de fermeture (24, 24') est vissé sur le corps de clapet (13, 13').

10. Clapet anitirefoulement d'égout selon l'une au moins des revendications 1 à 9, caractérisé en ce qu'entre le disque de fermeture (24) et le corps de clapet (13) est introduit un anneau support (23), sur un côté duquel une première zone de talon (20) du corps d'étanchéité (18) est collée de façon fixe, de préférence étanche, avec le disque de fermeture (24), et sur l'autre côté duquel l'autre zone de talon (22) est collée, également de façon étanche de préférence, avec le corps de clapet (13).

11. Clapet antirefoulement d'égout selon l'une au moins des revendications 1 à 10, caractérisé en ce que la face frontale du corps de clapet (13) comporte au moins une traverse (32) ou saillie périphérique concentrique, qui pénètre en engagement positif dans le corps d'étanchéité (l8', 18"), et en ce que le disque de fermeture (24'), éventuellement de forme circulaire, possède au moins une bride (40) décalée de 90° par rapport aux traverses (32) et saillies, bride qui pénètre également en engagement positif dans le corps d'étanchéité (18, 18").

**Claims**

1. Faeces non-return seal, in particular as an insert, having a base and having a non-return flap (3) which can be pivoted relative to the base (4), having an elastic sealing member (18) on the non-return flap which possesses a convexly curved, deformable bearing surface (29, 29', 29", which, when the non-return seal is closed, rests on a bearing surface (7) of the base (4), the elastic sealing member (18) being of tyre-shaped design and being fixed, by means of its tyre bead regions (20, 22) to the edge of a disc-shaped flap member (13, 13'), as if in a wheel rim, on the one hand and to a closing disc on the other hand, characterized in that the closing disc (24, 24') is firmly supported on the flap member (13, 13') and in that the bearing surface (29, 29', 29") of the sealing member (18, 18', 18") is convexly curved so that – in a plan view of the flap member (13, 13', 13") – it projects at least partially beyond the edge (21, 21', 21") of the flap member (13, 13', 13").

2. Faeces non-return seal according to Claim 1, characterized in that the sealing member (18) is a hollow rubber or plastic moulding or defines a cavity (19) on the flap member (13).

3. Faeces non-return seal according to Claims 1 and 2, characterized in that the sealing member (18) is held by means of the closing disc (24), towards the flap member (13), under a pre-stress which bends the bearing surface (29) convexly outwards.

4. Faeces non-return seal according to one of Claims 1 to 3, characterized in that the full cross-sectional foamed rubber or foamed plastic sealing member (18") on the bearing surface (29") is equipped with at least one, preferably three, peripheral sealing lips (36, 37, 38) which project approximately perpendicularly from the bearing surface (29").

5. Faeces non-return seal according to Claim 4, characterized in that the cross-section of each sealing lip (36, 37, 38) is triangular, the apex of the triangle pointing away from the bearing surface (29").

6. Faeces non-return seal according to Claim 4 or 5, characterized in that – in a plan view – one (38) of the sealing lips (36, 37, 38) projects above the edge (21") of the flap member (13") and that – in a lateral view at least the foremost sealing lip (36) lies in front of an arcuate front part (40) of the bearing surface (29").

7. Faeces non-return seal according to one of Claims 4 to 6, characterized in that the sealing lips (36, 37, 38) are designed with greater elasticity and plasticity than the remainder of the sealing member (18").

8. Faeces non-return seal according to at least one of Claims 1 to 7, characterized in that at least that part of the seating (7) on the base surface (4) which, when the non-return seal (1) is closed, meets the part of the bearing surface (21", 29, 29', 29") of the sealing member (13", 18, 18', 18") which projects over the edge (21, 21') of the flap member (13, 13') is of hollow design (cavity 8).

9. Faeces non-return seal according to at least one of Claims 1 to 8, characterized in that the closing disc (24, 24') is screwed to the flap member (13, 13').

10. Faeces non-return seal according to at least one of Claims 1 to 9, characterized in that a support ring (23) is inserted between the closing disc (24) and the flap member (13), on one side of which support ring one bead region (20) of the sealing member (18) is clamped by means of the closing disc (24), and on the other side of which support ring the other bead region (22) is clamped by means of the flap member (13), preferably in a sealed manner in each case.

11. Faeces non-return seal according to at least one of Claims 1 to 10, characterized in that at least one concentrically circumferential web (32) or projection is provided on the end face of the flap member (13'), these engaging with positive fit into the sealing member (18', 18"), and in that the closing disc (24'), which may or may not be of circular form, possesses at least one flange (40) offset by 90° relative to the webs (32) and projections, which flange likewise engages with positive fit into the sealing member (18', 18").

EP 0 283 864 B1

# FIG 1

FIG 2